# EUROPEAN PATENT APPLICATION

(11) **EP 4 625 164 A1**
(43) Date of publication of application: **01.10.2025**
(21) Application number: 24188287.7
(22) Date of filing: 12.07.2024
(51) Int. Cl.: G06F 9/455

(54) **INTEGRATION FLOW SCRIPT OPTIMIZATION USING GENERATIVE MODEL**

(30) Priority: 28.03.2024 US 202418619522
(71) Applicant: SAP SE, 69190 Walldorf (DE)
(72) Inventor: Raza, Syed Muhammad Kumail, 69190 Walldorf (DE); Muenkel, Markus, 69190 Walldorf (DE); Kolev, Mitko, 69190 Walldorf (DE); Eiro, Marc, 69190 Walldorf (DE)
(74) Representative: Müller-Boré & Partner Patentanwälte PartG mbB

(57) **Abstract**

Systems and methods include execution of a script in an execution environment, the script implementing a portion of a flow to receive a message from a sender and transmit the message to a receiver, determination of resource consumption data indicating resource consumption in the execution environment during execution of the script in the execution environment, transmission of a prompt to a text generation model, the prompt including the resource consumption data and the script, receive, from the text generation model and in response to the prompt, a response indicating one or more modifications to the script, and present the one or more modifications.

## Description

### BACKGROUND

Modern organizations often utilize a system landscape consisting of one or more software applications executing within one or more computing environments. For example, an organization may use applications deployed on computer servers located in on-premise data centers and within data centers provided by one or more platform-as-a-service (PaaS) providers. Any of these computer servers may comprise cloud-based systems (e.g., providing services using scalable-on-demand virtual machines).

An integration platform is used to facilitate messaging between different software applications. For example, an integration platform may receive messages sent by one software application (i.e., a sender component), and route the messages to one or more software applications (i.e., receiver components). The integration platform may perform various actions (e.g., splits, transformations) on a received message prior to routing to the message to the receiver component.

An integration platform selects and executes an integration flow in response to reception of a message. An integration flow defines actions to perform in response to reception of a message from at least one particular sender component and intended for at least one particular receiver component. Different integration flows may be individually programmed and deployed based on the needs of an enterprise. Programming of an integration flow may consist of selecting and ordering a set of predefined functional components. Some integration platforms support the inclusion of customer-developed scripts to perform actions within an integration flow.

Typically, the predefined functional components are tested and optimized for use in the integration platform by a provider of the integration platform. However, because the above-mentioned scripts are developed by the customer, the scripts may exhibit sub-optimal characteristics even though the scripts are executable to perform their desired actions. These sub-optimal characteristics may relate to non-functional requirements such as but not limited to resource consumption (e.g., memory, CPU, database), performance, brittleness, and scalability. These risks can impact one or more integration scenarios, leading to failures or even downtimes in message processing.

Systems are desired to efficiently improve the characteristics of scripts for use within integration flows.

### BRIEF DESCRIPTION OF THE DRAWINGS

FIG. 1 is a block diagram of a system to optimize integration flow scripts according to some embodiments.
FIG. 2 is a logical view of an integration flow according to some embodiments.
FIG. 3 is a view of an interface of an integration flow script editor according to some embodiments.
FIG. 4 is a flow diagram of a process to optimize an integration flow script according to some embodiments.
FIG. 5 is a view of an interface of an integration flow script editor presenting indications of script modifications according to some embodiments.
FIG. 6 is a view of an interface of an integration flow script editor presenting indications of script modifications according to some embodiments.
FIG. 7 is a flow diagram of a process to optimize an integration flow script according to some embodiments.
FIG. 8 is a block diagram of a system to determine context data for a system prompt according to some embodiments.
FIG. 9 is a block diagram of an execution environment including an integration runtime and resource monitoring components according to some embodiments.
FIG. 10 is a block diagram of a multi-tenant execution environment including resource monitoring components according to some embodiments.
FIG. 11 is a block diagram of a cloud-based system to optimize integration flow scripts according to some embodiments.

### DETAILED DESCRIPTION

The following description is provided to enable any person in the art to make and use the described embodiments. Various modifications, however, will be readily apparent to those in the art.

Some embodiments may provide efficient optimization of integration flow scripts. The optimization may include consideration of the script itself and of characteristics observed during runtime processing of messages by an integration flow which includes the script. The runtime characteristics may be used to generate a system prompt for a text generation model, such as a Large Language Model (LLM), for the purpose of determining efficient and actionable recommendations for optimizing the script.

Generation of a system prompt may include, but is not limited to, identifying knowledge base articles, component documentation, blogs, etc. associated with the runtime characteristics of an integration flow script. Generation of a system prompt may also include selection of a system prompt template based on the runtime characteristics. In view of the system prompt, the text generation model is better able to provide suitable recommendations for improving the runtime characteristics of the integration flow script. The recommendations may be provided in the form of modified code, code line-specific annotations, and/or text descriptions in some embodiments.

Some embodiments thereby facilitate the use of flexible programming languages to define actions within integration flows. Moreover, embodiments may identify issues with scripts which are not detectable using manual checks or conventional static code analysis tools.

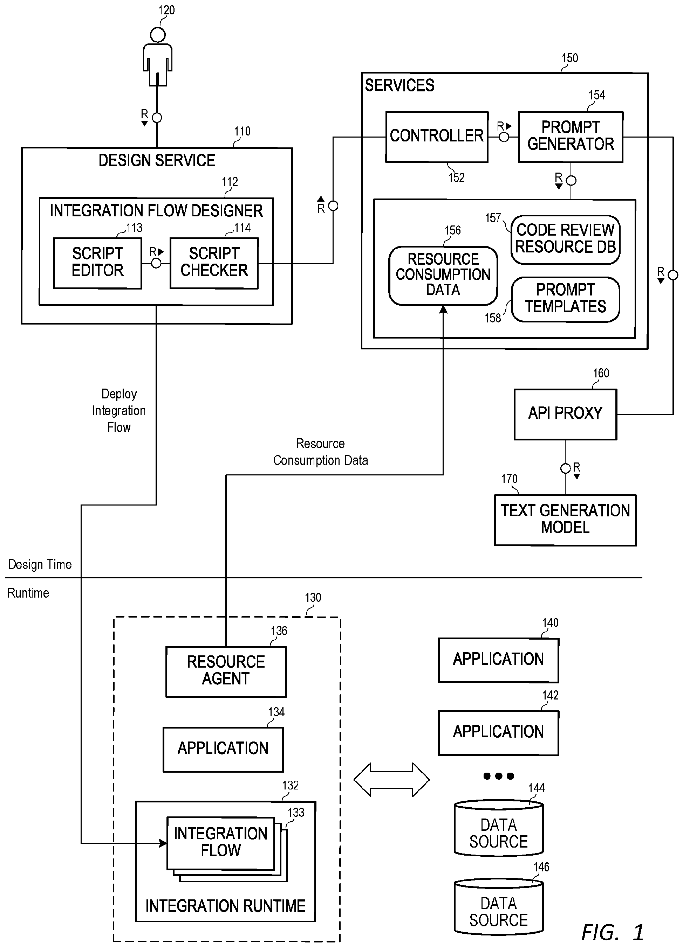

FIG. 1 is a block diagram of a system to optimize integration flow scripts according to some embodiments. Each of the illustrated components may be implemented using any suitable combination of on-premise, cloud-based, distributed (e.g., with distributed storage and/or compute nodes) computing hardware and/or software that is or becomes known. Each computing system described herein may comprise one or more physical and/or virtualized servers.

Design service 110 may comprise a system providing a development environment to developers such as developer 120. Design service 110 may comprise a general-purpose integrated development environment (IDE) and may support any programming language that is or becomes known. Design service 110 may support the development of artifacts for execution by a specific runtime such as, in the present example, an integration runtime.

Design service 110 includes integration flow designer 112, which is a software component for designing integration flows according to some embodiments. An integration flow specifies the handling of messages being passed from a sender to a receiver. Each sender and receiver may be assigned one or more integration flows, where each integration flow is used to process one or more particular types of messages sent from the sender to the receiver. The same integration flow may be assigned to handle messages passed between different pairs of senders and receivers.

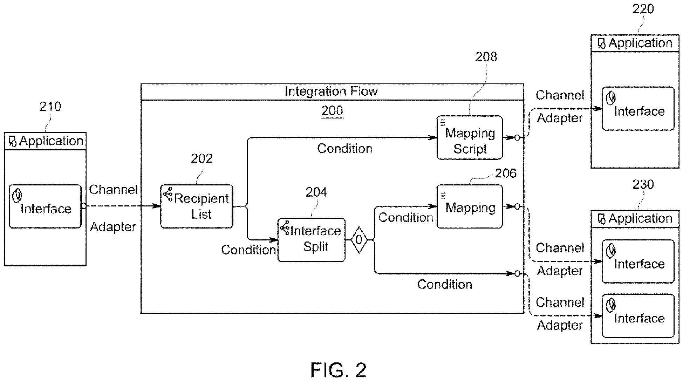

An integration flow consists of a logical sequence of actions, each of which is implemented by a predefined component, a script, or combinations thereof. FIG. 2 is a diagram of integration flow 200 according to some embodiments. Flow 200 receives a message from sender 210, performs processing actions, and sends three resulting messages to receiver applications 220 and 230. Embodiments are not limited to the structure or protocol of flow 200.

Actions 202, 204 and 206 may comprise predefined components provided by a provider of an integration runtime. In such a case, a designer of flow 200 may specify configuration parameters of actions 202, 204 and 206. Action 208 is a mapping implemented by a script, such as but not limited to a Groovy script. Integration flow designer 112 includes script editor 113 providing editing functions. Such editing functions may include calling script checker component 114 to initiate one or more checks on a script under edit.

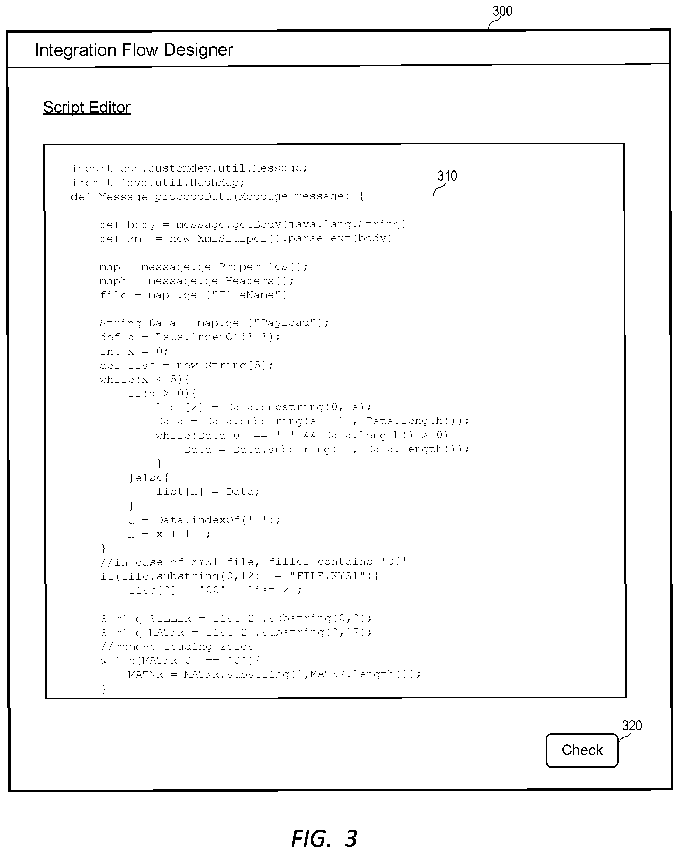

FIG. 3 is a view of interface 300 of integration flow designer 112 including script editor 113 according to some embodiments. Developer 120 may operate a Web browser to access integration flow designer 112 via a corresponding Uniform Resource Locator (URL) and integration flow designer 112 returns an interface such as interface 300.

Interface 300 presents script 310 which may provide an action to be used in one or more integration flows. Script 310 may be created by a developer such as developer 120. Interface 300 also includes Check control 320. According to some embodiments, Check control 320 is selectable to call script checker component 114. In some embodiments, other interfaces of integration flow designer 112 are used to manage deployment of an integration flow which includes script 310. Embodiments are not limited to the particular features of integration flow designer 112 and script editor 113 described herein.

Returning to FIG. 1, execution environment 130 includes integration runtime 132, application 134 and resource agent 136. Execution environment 130 may comprise one or more servers, virtual machines, clusters of a container orchestration system, etc. Execution environment 130 may provide an operating system, services, I/O, storage, libraries, frameworks, etc. to services executing therein.

Integration runtime 132 may comprise a component for executing integration flows 133. Integration flows 133 may be designed using integration flow designer 112 and deployed to runtime 132 as is known in the art. Each of integration flows 133 defines a sequences of actions and executable components for performing each action, and one or more of integration flows 133 includes an integration flow script which is executable to perform a corresponding action. Executable components, including scripts, may be reused within more than one integration flow 133.

An integration flow 133 may be associated with a particular sender, receiver and message type. During runtime, integration runtime 132 receives a message from a sender which is intended for a particular receiver. Integration runtime 132 identifies one of integration flows 133 which is associated with the sender and receiver and passes the message to the identified integration flow 133. The identified integration flow 133 executes a sequence of actions based on the message and sends a message to the intended receiver. The sender and receiver may be ones of applications 134, 140, 142 and data sources 144 and 146. Any number or type of senders/receivers may be associated with one or more of integration flows 133.

Execution environment 130 includes resource agent 136 to measure the consumption of resources (e.g., CPU, memory, bandwidth) within execution environment 130. Resource agent 136 may be capable of measuring resource consumption due to execution of an integration flow script of integration flows 133. Resource agent 136 may be implemented in any manner is or becomes known, for example using an API exposed by execution environment 130 or the Prometheus monitoring system.

Resource agent 136 provides resource consumption data to services 150, where it is stored as resource consumption data 156. Services 150 also include code review resource database 157 and prompt templates 158. Code review resource database 157 may comprise a vectorized database used to identify resources for context augmentation as will be described below. Such resources may be stored in third-party repositories (not shown) and may include but are not limited to knowledge base articles, wiki entries, and blogs.

Embodiments may use resource consumption data associated with runtime execution of an integration flow script and corresponding code review resources 157 and prompt templates 158 to efficiently determine modifications to the script. The modifications may be intended to optimize resource consumption of the script.

For example, in response to a design-time instruction to check an integration flow script (e.g., received via Check control 320), script checker component 114 may send a request including the script to controller 152 of services 150. Services 150 may be exposed to one or more instances of design service 110 and to instances of other design services.

Controller 152 calls prompt generator 154 to determine a system prompt for requesting a check of the integration flow script. Prompt generator 154 generates a system prompt using one of prompt templates 158, one or more of code review resources 157 based on resource consumption data 156 associated with execution of the integration flow script. The resource consumption data 156 associated with execution of the integration flow script was received from resource agent 136 during one or more prior executions of the integration flow script within execution environment 130.

Prompt generator 154 may select one of prompt templates 158 and/or one or more of code review resources 157 based on the resource consumption data 156 associated with execution of the integration flow script. For example, the resource consumption data 156 may indicate high memory usage. Accordingly, one of prompt templates 158 may be selected which includes text requesting checking of the integration flow script for memory consumption-related issues. Additionally, or alternatively, one or more of code review resources 157 may be selected which describe the identification and resolution of memory consumption-related issues within a script. According to some embodiments, selection of a prompt templates 158 is not based on resource consumption data 156 and/or selection of one or more code review resources 157 is not based on resource consumption data 156.

Prompt generator 154 transmits the generated system prompt and a user prompt including the integration flow script to Application Programming Interface (API) proxy 160 of trained text generation model 170. Text generation model 170 may comprise a neural network trained to generate text based on input text. Trained text generation model 170 may be implemented by, for example, executable program code, a set of hyperparameters defining a model structure and a set of corresponding weights, or any other representation of an input-to-output mapping which was learned as a result of the training.

According to some embodiments, model 170 is a large language model (LLM) conforming to a transformer architecture. A transformer architecture may include, for example, embedding layers, feedforward layers, recurrent layers, and attention layers. Generally, each layer includes nodes which receive input, change internal state according to that input, and produce output depending on the input and internal state. The output of certain nodes is connected to the input of other nodes to form a directed and weighted graph. The weights as well as the functions that compute the internal states are iteratively modified during training.

An embedding layer creates embeddings from input text, intended to capture the semantic and syntactic meaning of the input text. A feedforward layer is composed of multiple fully-connected layers that transform the embeddings. Some feedforward layers are designed to generate representations of the intent of the text input. A recurrent layer interprets the tokens (e.g., words) of the input text in sequence to capture the relationships between the tokens. Attention layers may employ self-attention mechanisms which are capable of considering different parts of input text and/or the entire context of the input text to generate output text.

Non-exhaustive examples of trained text generation model 170 include GPT-4, LaMDA, Claude or the like. Model 170 may be publicly available or deployed within a landscape which is trusted by a provider of services 150. Similarly, text generation model 170 may be trained based on public and/or private data.

Text generation model 170 generates a response based on the system prompt and the user prompt. The response may indicate one or more modifications to the integration flow script. The indicated modifications may be intended to address any unsuitable resource consumption identified within the resource consumption data 156 associated with execution of the integration flow script. The response is returned to script editor 113 and the one or more modifications may be displayed thereby to developer 120. Developer 120 may edit the script in view of the one or more modifications and deploy the modified script for use within integration flows 133 at runtime as described above.

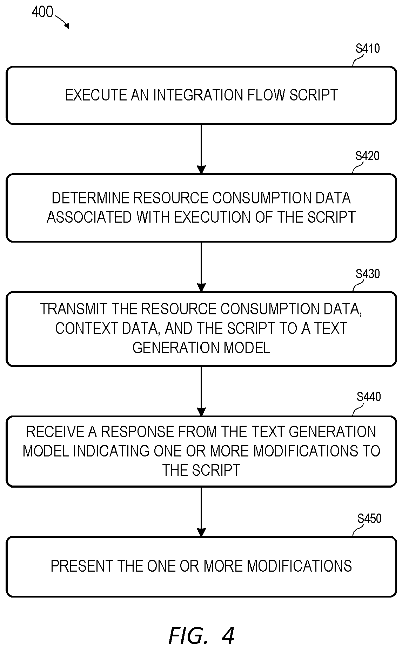

FIG. 4 comprises a flow diagram of process 400 to optimize an integration flow script according to some embodiments. Process 400 and the other processes described herein may be performed using any suitable combination of hardware and software. Software program code embodying these processes may be stored by any non-transitory tangible medium, including a fixed disk, a volatile or non-volatile random access memory, a DVD, a Flash drive, or a magnetic tape, and executed by any one or more processing units, including but not limited to a microprocessor, a microprocessor core, and a microprocessor thread. Embodiments are not limited to the examples described below.

Prior to process 400, an integration flow including an integration flow script is created and deployed to a runtime environment (e.g., an integration runtime). During operation of the runtime environment (e.g., in a test or productive landscape), the integration flow is executed to facilitate communication between a sender and a receiver. Execution of the integration flow causes execution of the integration flow script at S410. S410 may include multiple executions of the integration flow and, consequently, multiple executions of the integration flow script.

Resource consumption data associated with execution of the script is determined at S420. According to some embodiments, S420 may comprise monitoring the resources consumed within the execution environment (e.g., CPU cycles, CPU usage percentage, peak memory usage (raw and %), average memory usage (raw and %), bandwidth, database connection pool resources, data-store sizes) due to (e.g., during) the execution of the integration flow script. S420 may comprise collecting resource consumption data over time, for example over the course of multiple executions of the integration flow script. The resource consumption data may be determined at S420 by a monitoring component of the execution environment, a monitoring component of the integration runtime, and any other suitable component.

Next, in order to check the integration flow script, the resource consumption data, context data and the script are transmitted to a trained test generation model at S430. The context data may be provided within a system prompt and may indicate that the script is to be reviewed for errors and/or optimizations. The context data may also specify one or more types of errors and/or optimizations to be considered and may include information for identifying and/or resolving such errors and/or optimizations. The information may include knowledge base articles, blogs, etc.

A response is received from the text generation model at S440. The response indicates one or more modifications to the integration flow script. Depending on whether it was requested by the system prompt, the response may also include an explanation of the one or more modifications. The one or more modifications are presented at S450. The one or more modifications may be presented in any suitable manner.

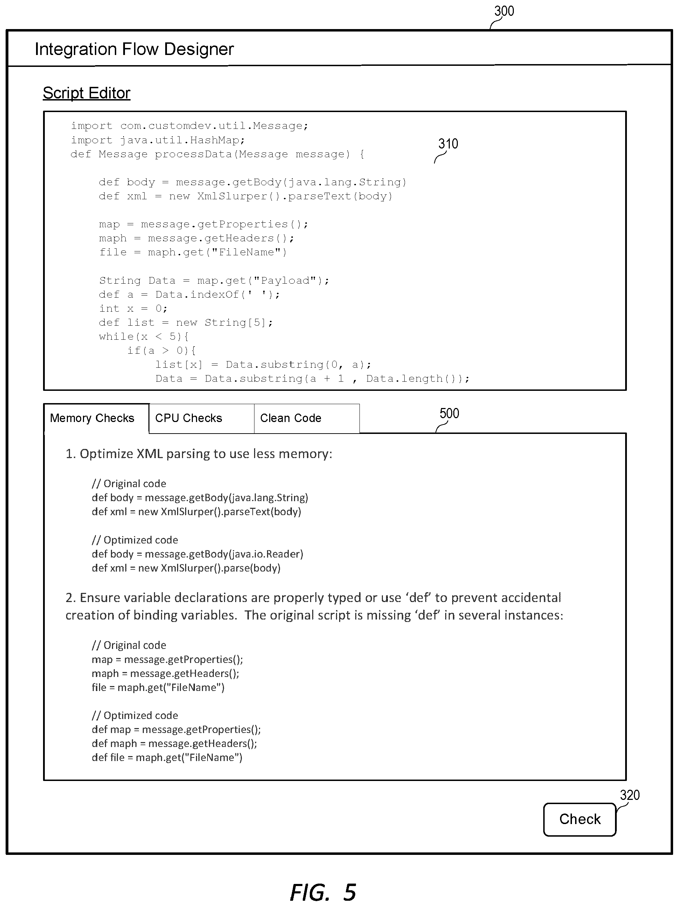

FIG. 5 is a view of interface 300 showing script 310 and indications 500 of script modifications returned from the text generation model at S440 according to some embodiments. Indications 500 are presented via tabs entitled Memory Checks, CPU Checks and Clean Code. The Memory Checks tab is shown as selected in FIG. 5.

In the illustrated embodiment, the Memory Checks tab presents indications of script modifications related to memory usage. Each indication includes a description of the purpose of the modification, the original code to be modified and a modified version of the original code. Embodiments are not limited to the indications of FIG. 5. For example, indications 500 of the Memory Checks tab may further include the following:
3. Regular expressions can be used to split the Data string into blocks instead of manually iterating and using indexOf. This can be more efficient and less error-prone:

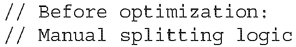

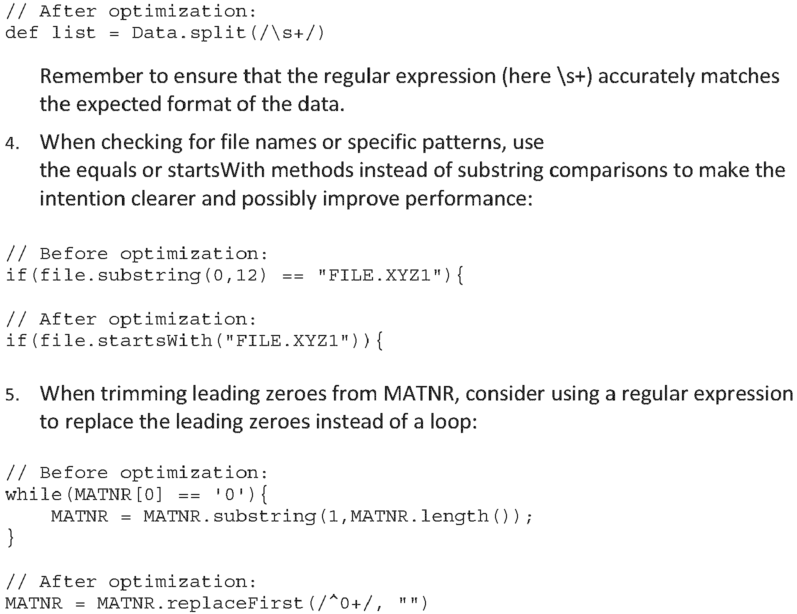

The CPU Usage tab may present indications of script modifications related to CPU performance. The Clean Code tab may present the original code as modified to incorporate one or more of the modifications. The "clean" code may be generated by applying a series of refactoring steps to the original code based on clean code principles and the one or more script modifications. According to one example, the clean code presented by the Clean Code tab of FIG. 5 may read as follows:

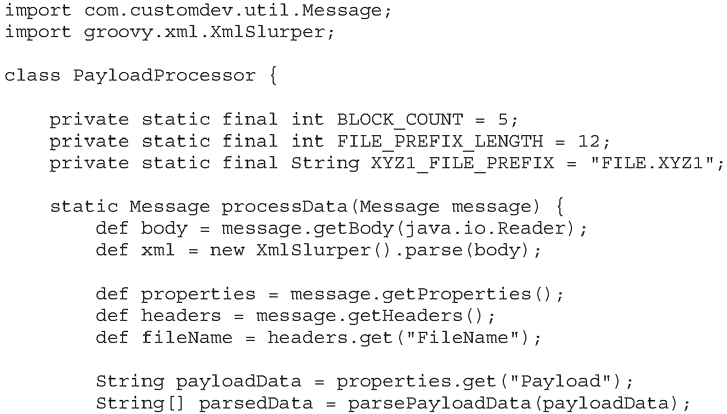

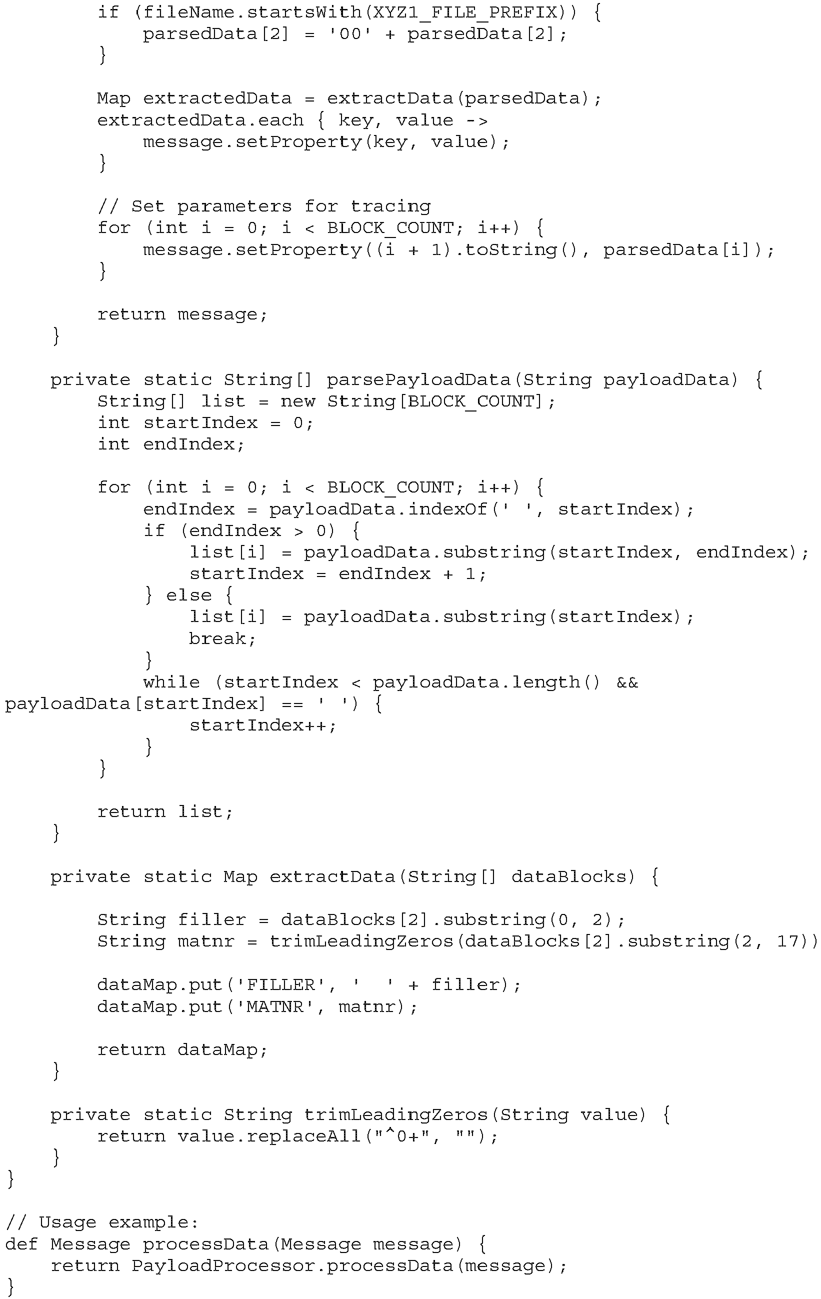

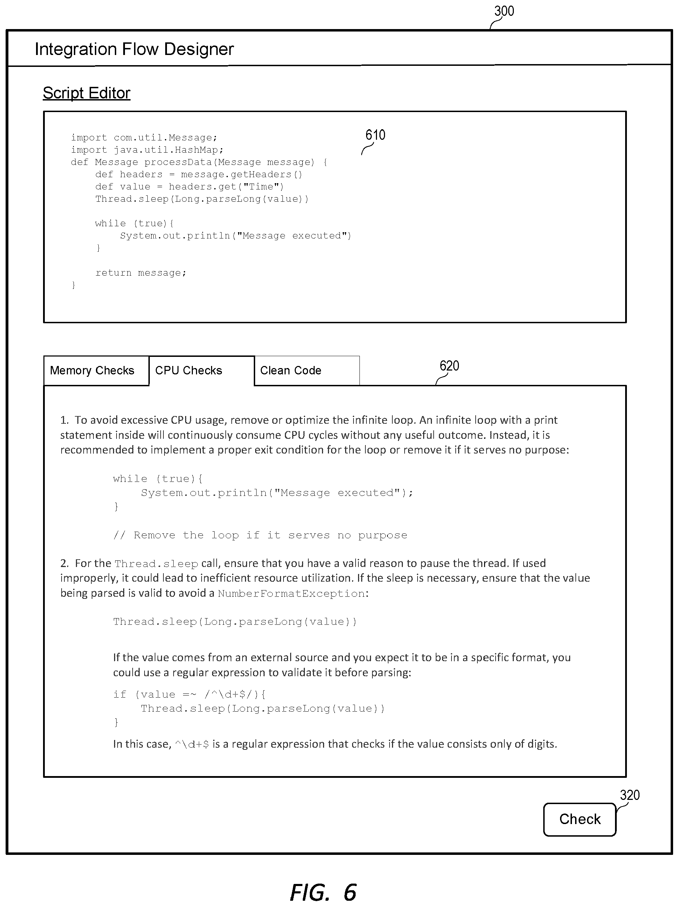

FIG. 6 is a view of interface 300 showing script 610 and indications 620 of script modifications returned from the text generation model at S440 according to some embodiments. The CPU Checks tab is shown as selected in FIG. 6. The CPU Checks tab presents indications of script modifications related to CPU usage, where each indication includes a description of the purpose of the modification, the original code to be modified and a modified version of the original code.

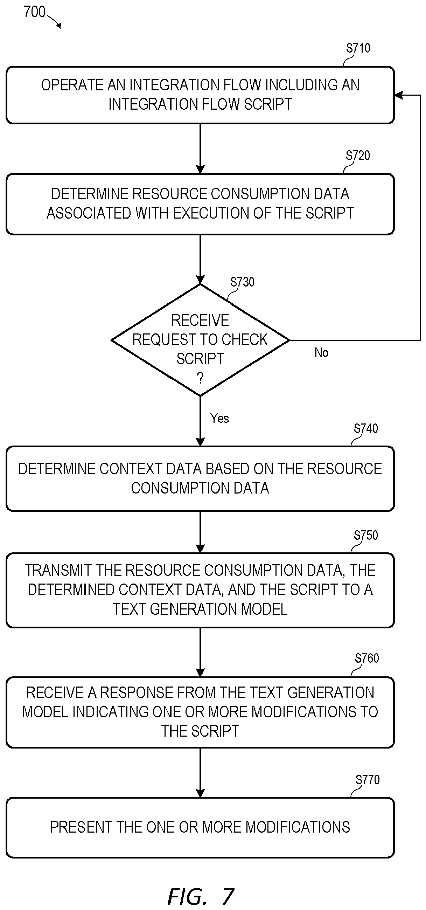

FIG. 7 is a flow diagram of process 700 to optimize an integration flow script according to some embodiments. Process 700 may comprise an implementation of process 400, but embodiments are not limited thereto.

Initially, at S710, an integration flow including an integration flow script is operated in a runtime environment. The runtime environment may be a component of a landscape including tenants operating integration middleware and integration flows deployed to this middleware. The integration flow is operated when a message from an associated sender is received, in order to process the message and send the processed message to a receiver.

Operation of the integration flow at S710 causes execution of the integration flow script. Resource consumption data associated with execution of the script is determined at S720, for example as described above with respect to S420. In some embodiments, S710 and S720 are executed independently, in parallel with one another, and in parallel with the remaining steps of process 700.

At S730, it is determined whether a request to check the integration flow script has been received. If not, flow returns to S710 to continue to operate the integration flow when needed and to determine resource consumption data associated with execution of the integration flow script. Flow cycles between S710, S720 and S730 until a request to check the script is received.

In one example, a developer may operate an interface of a designer component to request a check of the script as described above. Such a request is identified at S730, causing flow to proceed to S740. At S740, context data is determined based on the resource consumption data determined at S720. Determination of the context data may comprise determination of a system prompt template and/or determination of code review resources with which to populate a system prompt template. In one example of the former, the determined resource consumption data may indicate high CPU usage. S740 may therefore include selection of a prompt template which includes text requesting checking of the integration flow script for CPU consumption-related issues. In an example of the latter, several articles and blogs may be located which describe the identification and resolution of CPU consumption-related issues.

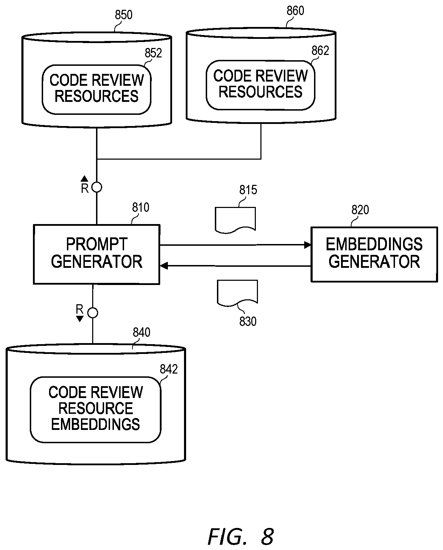

According to some embodiments, a vector database is used to determine context data at S740. A vector database associates code review resources with embeddings generated from the resources. FIG. 8 is a block diagram of a system to determine context data for a system prompt using a vector database according to some embodiments.

Database 840 stores code review resource embeddings 842. Code review resource embeddings 842 are multi-dimensional vector representations of various code review resources. Each of embeddings 842 is associated with endpoint information using which the code review resource it represents may be retrieved.

Databases 850 and 860 store, respectively, code review resources 852 and 862. code review resources 852 and 862 may comprise knowledge base articles, blogs, wiki entries, etc. Databases 850 and 860 may be owned and operated by different entities, including entities different from an entity providing database 840. Databases 840, 850 and 860 may comprise any searchable data storage systems, including but not limited to a monolithic or distributed database systems.

In some embodiments of S740, prompt generator 810 transmits resource consumption data 815 to embeddings generator 820. According to some embodiments, resource consumption data 815 is or includes a summary of resource consumption which is generated based on the resource consumption data determined at S720. The summary may be generated from the resource consumption data using a text generation model.

Embeddings generator 820 may comprise any suitable component to map text to a multi-dimensional vector space. Embeddings generator 820may comprise the same component or a component employing a similar mapping as that used to generate code review resource embeddings 842 from code review resources 852 and 862. Embeddings generator 820 generates and returns embedding 830 corresponding to resource consumption data 815. Prompt generator 810 queries database 840 with embedding 830 to determine code review resources related to embedding 830, and fetches those code review resources from databases 850 and/or 860.

The context data (in the form of a system prompt), resource consumption data, and the script are transmitted to a trained test generation model at S750. A response indicating one or more modifications to the integration flow script is received from the text generation model at S760. The one or more modifications are then presented at S770, in any suitable manner.

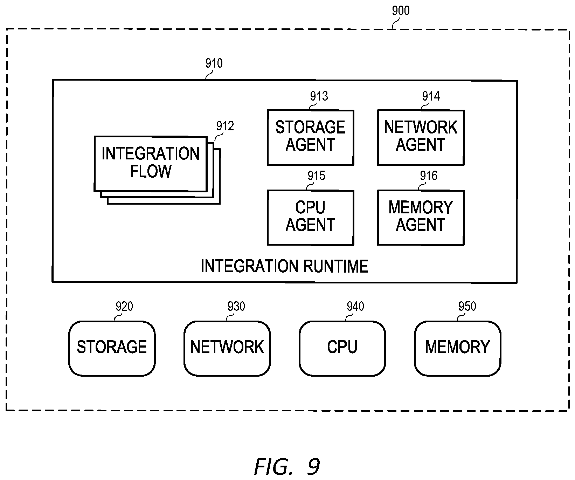

FIG. 9 is a block diagram showing an example of environment 900 including integration runtime 910 according to some embodiments. In some examples, environment 900 is a cloud environment and integration runtime 910 is executed within a tenancy at the cloud environment.

Environment 900 provides various computing resources 920-950 to integration runtime 910 and to other applications executing within environment 900. During execution of integration flows 912, integration runtime 910 utilizes computing resources 920-950 and agents 913-916 track such usage. Resource consumption data representing resource consumption associated with execution of integration flow scripts of integration flows 912 may thereby be collected for use by a prompt generator as described above.

Memory agent 916 monitors requests by integration flows 912 to access memory 950. Network agent 914 monitors requests by integration flows 912 for use of network resources 930. Storage agent 913 monitors requests by integration flows 912 for storage resources 920. CPU agent 915 monitors requests by integration flows 912 for CPU resources 940. Although distinct agents 913-916 are described as corresponding to specific resources 920-950, in some examples a single agent may monitor usage of multiple different resources and/or multiple different resource types.

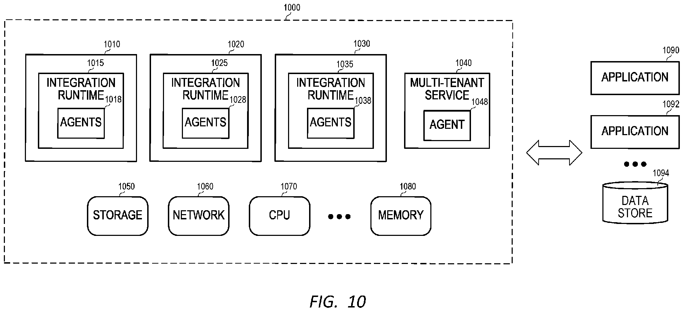

FIG. 10 is a block diagram of multi-tenant execution environment 1000 including resource monitoring components according to some embodiments. Environment 1000 may comprise a public cloud environment providing an integration platform according to a SaaS format. Environment 1000 comprises tenancies 1010, 1020, 1030, each of which may execute one or more software applications provided to customer enterprises, for example, according to a SaaS arrangement.

Applications (not shown) executing at the tenancies 1010, 1020, 1030 may utilize common cloud environment computing resources such as, for example, memory resources 1080, network resources 1060, data storage resources 1050, and/or CPU resources 1070. In some examples, environment 1000 may assign or reserve portions of one or more computing resources for particular applications executing at one or more of tenancies 1010, 1020, 1030.

Memory resources 1080 may include random access memory that is accessible to various applications executing at the tenancies 1010, 1020, 1030. Network resources 1060 may include network adapters, routers, switches, and/or other network equipment that is available for use by applications executing at the tenancies 1010, 1020, 1030. In some examples, network resources 1080 may be described by an available bandwidth.

Storage resources 1050 may include locations at which applications executing at the tenancies 1010, 1020, 1030 can store data. In some examples, storage resources 1050 may include disks or drives at one or more servers that are also executing applications associated with one or more tenancies 1010, 1020, 1030. Storage resources 1050 may include one or more DBMSs provided for the various tenancies. The DBMSs may execute a common server with one or more of the tenancies 1010, 1020, 1030 or at one or more different servers.

CPU resources 1070 may be provided by one or more processors at one or more servers implementing environment 1000. Usage of CPU resources 1070 may be described in terms of processor time, operations, and/or any other suitable measure. Environment 1000 may provide additional or fewer resources than are shown in FIG. 10.

Each integration runtime 1015, 1025, 1035 manages messaging between two or more software components, such as cloud application 1090, on-premise executed application 1092, and DBMS 1094. Cloud application 1090 may be executed in a cloud environment such as a public cloud environment or a private cloud environment, including but not limited to environment 1000. An integration runtime may manage messaging for more than a single cloud application.

On-premise application 1092 is executed at an on-premise computing system. For example, an enterprise utilizing on-premise application 1092 may maintain one or more servers, network equipment components, and or the like to implement the on-premise computing system. On-premise application 1092 may be implemented by executing appropriate software at the on-premise computing system. DBMS 1094 may be implemented, for example, in a cloud environment and/or in an on-premise environment. DBMS 1094 may implement a database management system that may be associated with one or more client applications.

Each integration runtime 1015, 1025, 1035 may include one or more associated agents 1018, 1028, 1038. Agents 1018, 1028, 1038 may be configured to collect resource usage data describing resource usage due to execution of integration flow scripts. Agents 1018, 1028, 1038 may be further configured to periodically provide the resource usage data to a central service (not shown).

Agents 1018, 1028, 1038 may be configured to monitor resource requests made by respective integration flow scripts. For example, an agent 1018, 1028, 1038 may be configured to intercept requests to memory resources 1080, network resources 1060, storage resources 1050, and/or CPU resources 1070. An agent 1018, 1028, 1038 may maintain a record of resource requests and consumption by an integration flow script and may periodically provide the resulting consumption data to an intermediate storage.

Multitenant service 1040 provided by environment 1000 may be called and/or otherwise utilized by applications executing at more than one of the tenancies 1010, 1020, 1030. Examples of multitenant services may include, for example, agent 1048 to monitor or manage resources 1050, 1060, 1070, 1080. A multitenant service may comprise a scripting service used to compile dynamic scripts from the integration flows and execute the dynamic scripts to return results to the calling integration flow. A multitenant service mapping service may map message formats from one schema to another and may be accessible to integration flows at different tenancies.

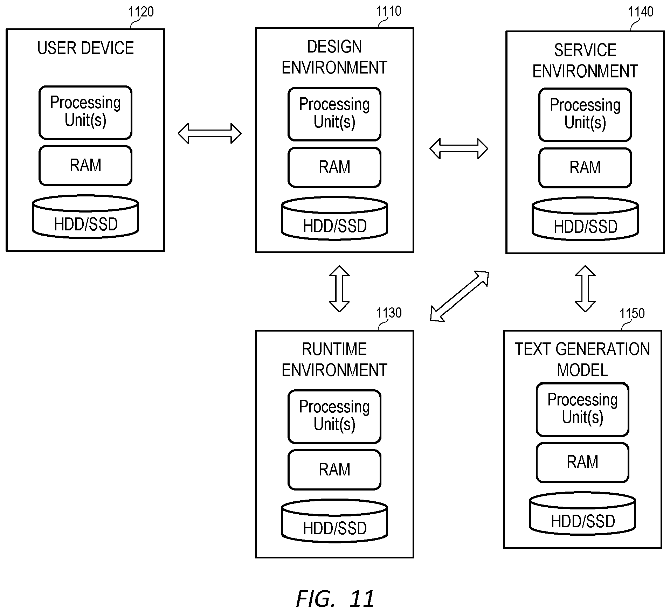

FIG. 11 is a block diagram of a cloud-based system according to some embodiments. Design environment 1110, runtime environment 1130, service environment 1140 and text generation model 1150 may each comprise cloud-based resources, such as virtual machines, allocated by a cloud provider providing self-service and immediate provisioning, autoscaling, security, compliance and identity management features.

User device 1120 may interact with a user interface of a design application executing in design environment 1110, for example via a Web browser executing on user device 1120. The design application may receive a request to check an integration flow script and may pass the request on to service environment 1140. Service environment 1140 determines resource consumption data associated with execution of the script by runtime environment 1130 and transmits the resource consumption data, the script, and context data to text generation model 1150. In response, service environment 1140 receives an indication of one or more modifications to the script and the modifications are presented to user device 1120 via design environment 1110.

The foregoing diagrams represent logical architectures for describing processes according to some embodiments, and actual implementations may include more or different components arranged in other manners. Other topologies may be used in conjunction with other embodiments. Moreover, each component or device described herein may be implemented by any number of devices in communication via any number of other public and/or private networks. Two or more of such computing devices may be located remote from one another and may communicate with one another via any known manner of network(s) and/or a dedicated connection. Each component or device may comprise any number of hardware and/or software elements suitable to provide the functions described herein as well as any other functions. For example, any computing device used in an implementation some embodiments may include a processor to execute program code such that the computing device operates as described herein.

Embodiments described herein are solely for the purpose of illustration. Those in the art will recognize other embodiments may be practiced with modifications and alterations to that described above.

## Claims

1. A system comprising:
a memory storing executable program code; and
at least one processing unit to execute the program code to cause the system to:
execute a script in an execution environment including a resource agent, the script implementing a portion of a flow to receive a message from a sender and transmit the message to a receiver;
determine, from the resource agent, resource consumption data associated with resource consumption by the execution environment during execution of the script in the execution environment;
transmit a prompt to a text generation model, the prompt including the resource consumption data and the script;
receive, from the text generation model and in response to the prompt, a response indicating one or more modifications to the script; and
present the one or more modifications.

2. A system according to Claim 1, wherein the prompt comprises a system prompt and a user prompt, the at least one processing unit to execute the program code to cause the system to:
determine the system prompt from a plurality of system prompts based on the resource consumption data; and
optionally, the at least one processing unit to execute the program code to cause the system to:
determine context data based on the resource consumption data; and
populate the system prompt with the context data.

3. A system according to Claim 1 or 2, the at least one processing unit to execute the program code to cause the system to:
determine context data based on the resource consumption data; and
populate the prompt with the context data.

4. A system according to any one of Claims 1 to 3, wherein presentation of the one or more modifications comprises presentation of a description of a code error.

5. A system according to any one of Claims 1 to 4, wherein presentation of the one or more modifications comprises presentation of a modified version of the script.

6. A method comprising:
determining resource consumption data represent resource consumption in an execution environment due to execution of a script in the execution environment, the script implementing a portion of a flow to receive a message from a sender and transmit the message to a receiver;
transmitting a prompt to a text generation model, the prompt including the resource consumption data and the script;
receiving, from the text generation model and in response to the prompt, a response indicating one or more modifications to the script; and
presenting the one or more modifications.

7. A method according to Claim 6, wherein the prompt comprises a system prompt and a user prompt, the method further comprising:
determining the system prompt from a plurality of system prompts based on the resource consumption data; and
optionally, the method further comprising:
determining context data based on the resource consumption data; and
populating the system prompt with the context data.

8. A method according to Claim 6 or 7, further comprising:
determining context data based on the resource consumption data; and
populating the prompt with the context data.

9. A method according to any one of Claims 6 to 8, wherein presenting the one or more modifications comprises presenting a description of a code error.

10. A method according to any one of Claims 6 to 9, wherein presenting the one or more modifications comprises presenting a modified version of the script.

11. A non-transitory medium storing program code executable by at least one processing unit of a computing system to cause the computing system to:
determine resource consumption data indicating resource consumption in an execution environment due to execution of a script in the execution environment;
transmit a prompt to a text generation model, the prompt including the resource consumption data and the script;
receive, from the text generation model and in response to the prompt, a response indicating one or more modifications to the script; and
present the one or more modifications.

12. A medium according to Claim 11, wherein the prompt comprises a system prompt and a user prompt, the at least one processing unit to execute the program code to cause the system to:
determine the system prompt from a plurality of system prompts based on the resource consumption data; and
optionally, the program code executable by at least one processing unit of a computing system to cause the computing system to:
determine context data based on the resource consumption data; and
populate the system prompt with the context data.

13. A medium according to Claim 11 or 12, the program code executable by at least one processing unit of a computing system to cause the computing system to:
determine context data based on the resource consumption data; and
populate the prompt with the context data.

14. A medium according to any one of Claims 11 to 13, wherein presentation of the one or more modifications comprises presentation of a description of a code error.

15. A medium according to any one of Claims 11 to 14, wherein presentation of the one or more modifications comprises presentation of a modified version of the script.
